# EUROPÄISCHE PATENTANMELDUNG

(11) **EP 1 190 898 A1**
(43) Veröffentlichungstag der Anmeldung: **27.03.2002**
(21) Anmeldenummer: 00120658.0
(22) Anmeldetag: 21.09.2000
(51) Int. Cl.: B60P 1/44, B60R 19/56

(54) **Ladebordwandsystem mit Unterfahrschutz**

(71) Anmelder: Sörensen Hydraulik Zweigniederlassung, Ulfborg, Filial af Sörensen Hydraulik GmbH, Tyskland, 6990 Ulfborg (DK)
(72) Erfinder: Jensen, Jens Herman, 6990 Ulfborg (DK)
(74) Vertreter: Niedmers, Ole, Dipl.-Phys.

(57) **Zusammenfassung**

Es wird ein Ladebordwandsystem (10) zur Anbringung an ein Fahrzeug (11) vorgeschlagen umfassend eine Ladeplattform (12), die mittels eines am Fahrzeug befestigten Hubaktuators (13) zwischen einer oberen und einer unteren Stellung schwenkend him und her bewegbar ist, sowie einen relativ zum Fahrzeug verschwenkbaren Unterfahrschutz (14). Dabei ist der Unterfahrschutz (14) mit seinem fahrzeugseitigen Schwenkpunkt (15,16) vom fahrzeugseitigen Schwenkpunkt wenigstens des Hubaktuators (13) und/oder eines Hubarmes (18) entkoppelt angeordnet.

## Beschreibung

Die Erfindung betrifft ein Ladebordwandsystem zur Anbringung an ein Fahrzeug, umfassend eine Ladeplattform, die mittels eines am Fahrzeug befestigten Hubaktuators zwischen einer oberen und einer unteren Stellung schwenkend hin und her bewegbar ist, sowie einen relativ zum Fahrzeug verschwenkbaren Unterfahrschutz.

Ein Ladebordwandsystem dieser Art ist bekannt (EP-A-0 941 896). Bei dem bekannten Ladebordwandsystem ist der Unterfahrschutz an einem Hubarm befestigt, die mit einem Hubaktuator zusammen die Hubeinrichtung bildet, wobei der Unterfahrschutz an der Hubeinrichtung nachuntenstehend angebracht ist und mit dieser mitverfahren wird, da der Unterfahrschutz selbst am Hubarm der Hubeinrichtung beweglich gelagert ist, wobei sich die Höhe des Hubarms während des Verfahrens der Hubeinrichtung ändern soll.

Der feste geometrische Zusammenhang zwischen dem Hubarm (dort Hubschwinge genannt) und dem Unterfahrschutz bewirkt somit eine automatische Bewegung des Unterfahrschutzes immer dann, wenn die Hubeinrichtung bewegt wird.

Diese enge Kopplung zwischen Hubeinrichtung bzw. Hubarm mit Hubaktuator und dem Unterfahrschutz ist für viele Fälle sehr nachteilig, insbesondere dann, wenn am Fahrzeugende eine Anhängerkupplung vorgesehen sein soll, denn diese Anhängerkupplung muß beim bekannten Ladebordwandsystem u.a. aufgrund dieser Kopplung verhältnismäßig weit in Fahrzeuglängsrichtung nach vorn, d.h. in Richtung des Führerhauses am Fahrzeugchassis, befestigt werden. Das hat wiederum zur Folge, daß die Bewegungsfreiheit einer Deichsel eines Anhängers erheblich beeinflußt wird. Zudem ist es erforderlich, daß bei Betrieb des Fahrzeugs mit Anhänger der Unterfahrschutz abgesenkt wird, um im angehobenen Zustand des Ladebordwandsystems überhaupt die Kupplung benutzen zu können, d.h. durch Absenken des Unterfahrschutzes die Kupplung überhaupt freizubekommen. Das Absenken eines Unterfahrschutzes ist allerdings im Anhängerbetrieb an sich nicht gewollt, da dadurch wiederum die Bewegungsfreiheit des Anhängers relativ zum ziehenden Fahrzeug beeinträchtigt wird. In diesem Fall hat man sich mit dem Ankoppeln des Anhängers an eine am Fahrzeug ggf. vorhandene weitere Tiefkuppeleinrichtung beholfen, wofür aber eine gesonderte, verlängerte Zugdeichsel erforderlich ist. Wenn allerdings die Tiefkuppeleinrichtung nicht vorhanden ist, ist dieser Ausweg versperrt.

Es ist deshalb Aufgabe der vorliegenden Erfindung, ein Ladebordwandsystem der eingangs genannten Art zu schaffen, mit dem eine Beeinträchtigung der Bewegungsfreiheit einer Zugdeichsel bei mit dem Fahrzeug vorgesehenen Anhängerbetrieb vollständig vermieden wird und grundsätzlich ein Absenken des Unterfahrschutzes bei Anhängerbetrieb weder vollständig noch teilweise erforderlich ist und somit auch ein Anhängerbetrieb ohne zweite Tiefkuppeleinrichtung am Fahrzeug fortwährend gewährleistet ist, wobei weitgehend die bisher bekannten, bewährten Konstruktionsprinzipien derartiger Ladebordwandsysteme beibehalten werden können und somit kostengünstig ohne die Notwendigkeit aufwendiger Sonderkonstruktionen bereitgestellt werden können.

Gelöst wird die Aufgabe gemäß der Erfindung dadurch, daß der Unterfahrschutz mit seinem fahrzeugseitigen Schwenkpunkt vom fahrzeugseitigen Schwenkpunkt wenigstens des Hubaktuators bzw. eines Hubarms entkoppelt angeordnet ist.

Der Vorteil der erfindungsgemäßen Lösung besteht im wesentlichen darin, daß aufgrund der Entkoppelung des fahrzeugseitigen Schwenkpunktes des Unterfahrschutzes vom fahrzeugseitigen Schwenkpunkt des Hubaktuators und/oder des Hubarmes auf sehr einfache und wirksame Weise auch eine konstruktive Entkoppelung der übrigen Elemente des Ladebordwandsystems vom Unterfahrschutz möglich ist, so daß einerseits der Unterfahrschutz in angehobener Passivstellung so weit in Fahrzeuglängsrichtung nach hinten herausstehend ausgebildet sein kann, daß eine am Fahrzeug in Fahrzeuglängsrichtung hinten vorgesehene Anhängerkupplung fortwährend frei ist, d.h. ein Anhänger daran angekoppelt werden kann und auch grundsätzlich ein Absenken des Unterfahrschutzes in eine abgesenkte Passivstellung, d.h. für den Ladebetrieb mittels der Ladeplattform, und in eine aktive abgesenkte Stellung möglich ist, bei der der Unterfahrschutz seine bestimmungsgemäße Unterfahrschutzfunktion ausüben kann. Da der Unterfahrschutz aufgrund seiner Entkoppelung relativ zu den übrigen konstruktiven Elementen des Ladebordwandsystems auch in bezug auf seine bestimmungsgemäßen Schwenkfunktionen, d.h. dem Verschenken in seine obere Passivstellung, in seine untere Passivstellung und in die Aktivstellung auch steuerungsmäßig von den übrigen Elementen des Ladebordwandsystems unabhängig ist, können, wie aufgabengemäß angestrebt, auch die bekannten, bewährten Konstruktionsprinzipien der Ladebordwandsysteme beibehalten werden, da diese aufgrund der erfindungsgemäßen Lösung nicht tangiert werden, so daß ebenfalls, wie angestrebt, eine kostengünstige Bereitstellbarkeit des Ladebordwandsystems erreicht wird.

Gemäß einer vorteilhaften Ausgestaltung des Ladebordwandsystems ist der Unterfahrschutz über ein Montageelement am Fahrzeug befestigt, wobei an diesem Montageelement ebenfalls die übrigen konstruktiven Elemente des Ladebordwandsystems befestigt sind. Ladebordwandsysteme der hier beschriebenen Art werden als komplette, voll funktionsfähige Einheiten an die Abnehmer geliefert, die fertige Kraftfahrzeuge z.B. mit Karosserien versehen. Die vorangehend beschriebene vorteilhafte Ausgestaltung des Ladebordwandsystems gewährleistet auch beim Vorsehen eines Unterfahrschutzes der erfindungsgemäßen Art eine Konstruktion, bei der das Ladebordwandsystem unter Einschluß des Unterfahrschutzes komplett und funktionsfähig an Abnehmer geliefert werden kann, so daß diese Gesamteinheit lediglich mit dem Fahrzeug über das Montageelement verbunden zu werden braucht. Grundsätzlich ist es aber auch möglich, den Unterfahrschutz direkt am Fahrzeug zu befestigen.

Gleichermaßen können auch die Elemente des Ladebordwandsystems selbst unmittelbar am Fahrzeug befestigt werden, es ist aber aus den voraufgeführten Gründen vorteilhaft, am Montageelement ebenfalls den Hubaktuator und einen Hubarm und/oder einen Klappaktuator und einen Klapparm anzuordnen, wobei im letzteren Fall das Ladebordwandsystem derart ausgebildet ist, daß es nicht nur Hub- und Absenkfunktionen der Ladeplattform ausführen kann, sondern auch ein Verschwenken der Ladeplattform in angehobenem Zustand von der Horizontalen in die Vertikale, um beispielsweise einen Laderaum eines Fahrzeugs zu verschließen, und umgekehrt, um den Laderaum zu öffnen. Bei derartigen Ausgestaltungen des Ladebordwandsystems sind wenigstens alle beweglichen Elemente vorteilhafterweise am Montageelement angeordnet.

Vorteilhaft ist es ebenfalls, den Unterfahrschutz mittels eines Schwenkaktuators aus einer abgesenkten Passivstellung in eine angehobene Passivstellung sowie in eine Aktivstellung schwenkbar auszubilden. Im Stand der Technik sind auch Lösungen bekannt, bei denen der Unterfahrschutz per Hand in die verschiedenen Stellungen überführt werden muß. Dieses ist aufgrund der naturgemäß sehr stabilen Konstruktionen des Unterfahrschutzes, damit dieser seine bestimmungsgemäße Unterfahrschutzfunktion ausführen kann, sehr schwer möglich, so daß die dabei durch eine Bedienungsperson aufzuwendende Kraft für diese unzumutbar groß ist bzw. bei sehr schweren Konstruktionen überhaupt nicht mehr aufgebracht werden kann. Mittels eines geeignet steuerbaren Schwenkaktuators, der in das fahrzeugeigene oder ein gesondertes Energiesystem eingebunden werden kann, kann somit auf einfache Weise das Kraftproblem einer Lösung zugeführt werden, wie sie beispielsweise auch für die Betätigung der übrigen Elemente des Ladebordwandsystems herangezogen wird.

Es ist nicht zwingend, daß der Schwenkaktuator im Zusammenwirken mit irgendwelchen konstruktiven Elementen des Ladebordwandsystems zum Eintritt in die verschiedenen passiven Betriebsstellungen und der aktiven Betriebsstellung überführt wird. D.h. mit anderen Worten, daß der Schwenkaktuator für den Unterfahrschutz grundsätzlich auch unmittelbar am Montageelement angeordnet sein kann oder aber unmittelbar am Fahrzeug. Vorteilhaft ist es aber, daß der Schwenkaktuator zwischen Hubarm und/oder dem Klapparm und wenigstens dem Unterfahrschutz wirkend angeordnet ist. Dadurch wird eine automatische Bewegung des Unterfahrschutzes erreicht, wenn der Hub- bzw. Klappaktuator bewegt wird.

Bei einer weiteren vorteilhaften Ausgestaltung des Ladebordwandsystems umfaßt der Unterfahrschutz wenigstens zwei Schwenkarme, die an ihren einen Enden jeweils ihren Schwenkpunkt aufweisen und an ihren anderen Enden über eine zu dem Schwenkarm im wesentlichen quer zum Fahrzeug verlaufenden Quertraverse verbunden sind. Zwar weisen im Stand der Technik bekannte Unterfahrschutzkonstruktionen einen ähnlichen Aufbau auf, die hier vorgeschlagene vorteilhafte Ausgestaltung hat jedoch den zusätzlichen Vorteil, daß damit eine weitere mechanische Stabilisierung des Ladebordwandsystems verbunden ist, was auch zu einer Torsionsverminderung des gesamten Ladebordwandsystems führt und auch zu einer Verminderung des Kippmoments, wenn beispielsweise das Ladebordwandsystem nur mit einem einzigen Hubaktuator ausgerüstet ist, wie es bei modernen Ladebordwandsystemen zunehmend der Fall ist.

Vorteilhafterweise ist die Schenkellänge der Schwenkarme des Ladebordwandsystems derart bemessen, daß in oberer, angehobener Passivstellung des Unterfahrschutzes eine obere und/oder eine untere, am Fahrzeug angeordnete Anhängerkupplung betreibbar ist (Tandemanhängerbetrieb). Die erfindungsgemäße Konstruktion ermöglicht es dem Betreiber eines mit dem erfindungsgemäßen Ladebordwandsystem ausgerüsteten Fahrzeugs, je nach Erfordernis, die eine oder die andere Anhängerkupplung zu benutzen, ohne daß es durch den Unterfahrschutz zu irgendwelchen Beeinträchtigungen der Bewegungsfreiheit für die Deichsel eines Anhängers kommt.

Grundsätzlich bieten sich mehrere Lösungen für den Betrieb bzw. die Betriebsweise des Schwenkaktuators für die Ausführung seiner bestimmungsgemäßen Funktion zum Verschwenken des Unterfahrschutzes an. So kann dieser beispielsweise hydraulisch und/oder pneumatisch betrieben werden, wobei dann der Schwenkaktuator auf klassische Weise ausgebildet ist, d.h. in Form einer Kolben-Zylinder-Einrichtung. Es ist aber auch möglich, den Schwenkaktuator elektrisch anzutreiben, d.h. den Aktuatorhub mittels einer Gewindespindel vonstatten gehen zu lassen, die von einem Motor, beispielsweise einem Elektromotor, ggf. aber auch von einem Hydraulikmotor, angetrieben werden kann.

Um aber auch den Schwenkaktuator bezüglich seiner bestimmungsgemäßen Funktion in die entsprechende Betriebsweise des Hubaktuators und/oder des Klappaktuators, wenn dieser bei bestimmten Ausführungsformen des Ladebordwandsystems vorhanden ist, einzubinden, ist es vorteilhaft, daß der Hubaktuator und/oder der Klappaktuator und/oder der Schwenkaktuator hydraulisch und/oder pneumatisch und/oder elektrisch antreibbar sind. Die diesbezügliche Konstruktion kann so gewählt werden, daß sogar die gleichen Energiequellen genutzt werden können, die für die einzelnen Aktuatoren am Ladebordwandsystem vorgesehen sind.

Die Erfindung wird nun unter Bezugnahme auf die nachfolgenden schematischen Zeichnungen anhand eines Ausführungsbeispieles im einzelnen beschrieben. Darin zeigen:
- Fig. 1: in perspektivischer Darstellung ein Ladebordwandsystem in Form einer Kompletteinheit, wie sie an einem Fahrzeug befestigt werden kann, unter Weglassung hydraulischer und/oder pneumatischer und/oder elektrischer Mittel,
- Fig. 2: in perspektivischer Darstellung eine andere Ansicht des in Fig. 1 dargestellten Ladebordwandsystems unter Weglassung der Ladeplattform,
- Fig. 3: im Teilausschnitt in der Seitenansicht unter Weglassung von für das Verständnis der Erfindung nicht notwendigen Elementen den hinteren Teil eines Fahrzeugs, der mit einem Ladebordwandsystem gemäß der Erfindung versehen ist, bei dem der Unterfahrschutz sich in angehobener Aktivstellung sich befindet,
- Fig. 4: eine Ansicht gemäß Fig. 3, bei der sich der Unterfahrschutz in abgesenkter Passivstellung befindet und mit abgesenkter Ladeplattform, und
- Fig. 5: eine Ansicht gemäß den Fig. 3 und 4, bei der sich der Unterfahrschutz in einer angehobenen Passivstellung befindet und bei der die Ladeplattform angehoben ist.

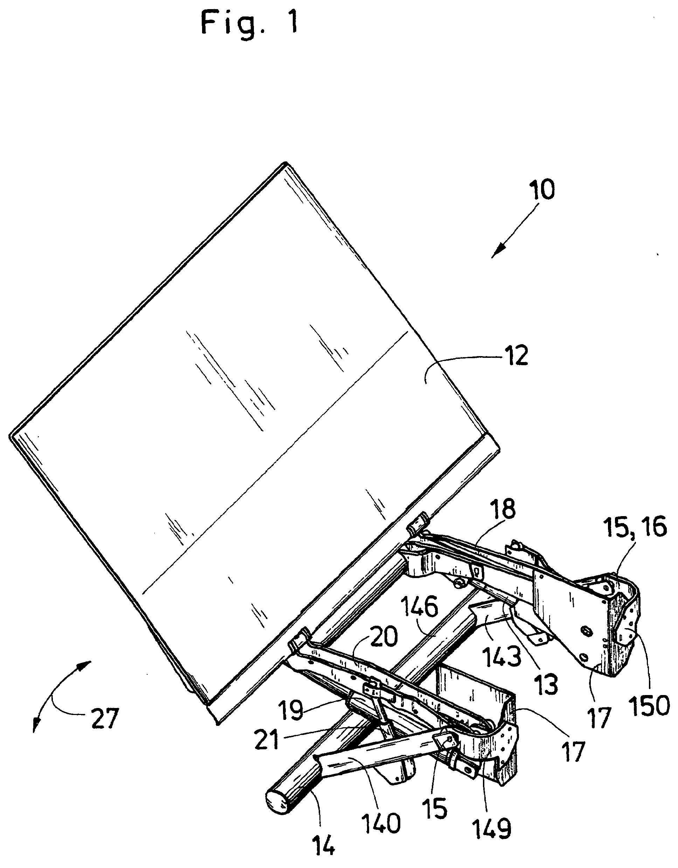

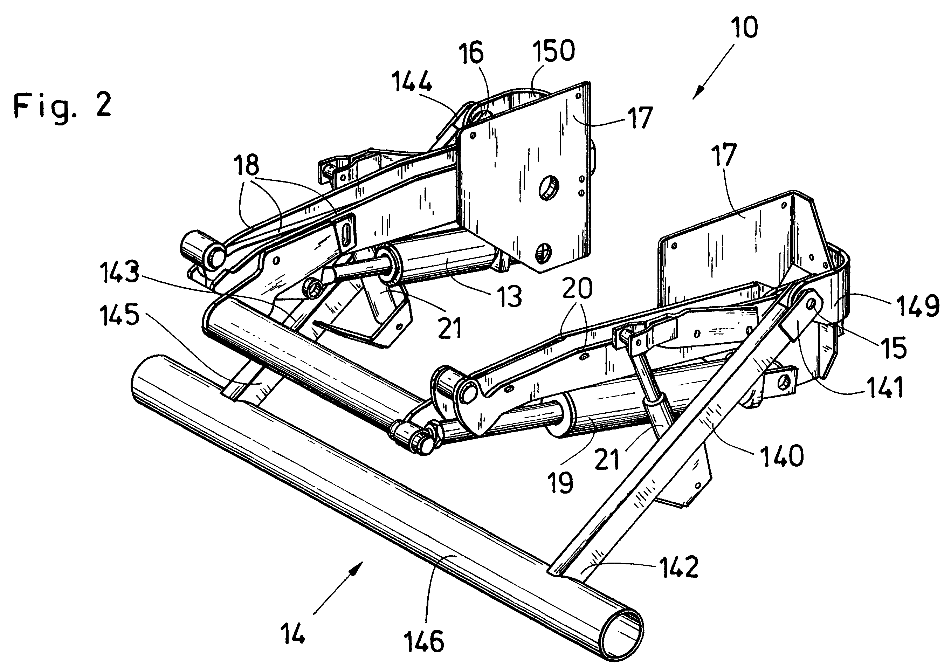

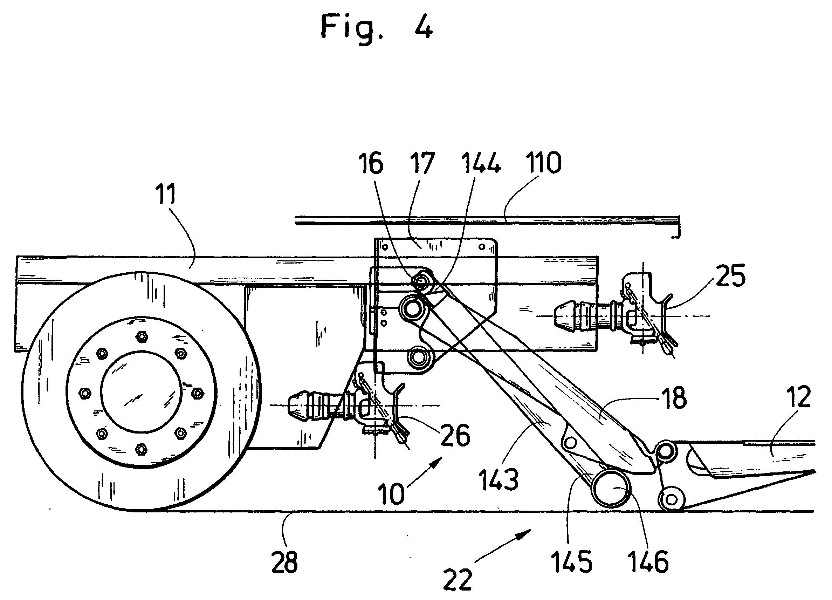

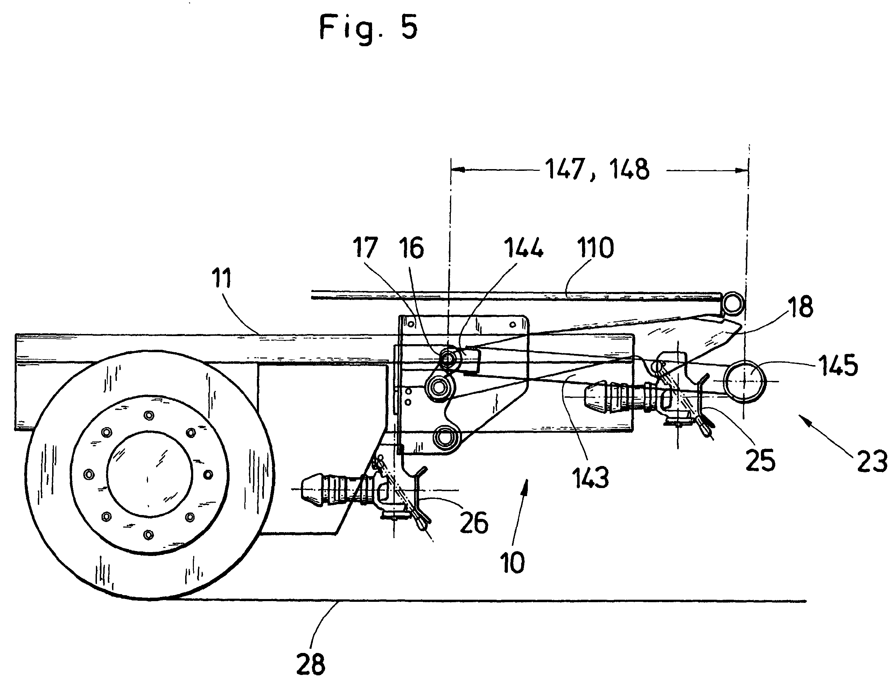

Es wird zunächst Bezug genommen auf die Darstellung von Fig. 1, in der das Ladebordwandsystem 10 gemäß der Erfindung unter Weglassung von Steuer- und Antriebsmitteln dargestellt ist. Da derartige Ladebordwandsysteme 10 im Stand der Technik als solche bekannt sind, wird auf den allgemeinen Aufbau hier nur kurz eingegangen. Auch das Fahrzeug selbst, an dem das Ladebordwandsystem als vollständige Einheit über Montageelemente 17 befestigt werden kann, ist hier aus Übersichtlichkeitsgründen weggelassen worden. Das Ladebordwandsystem 10 umfaßt im wesentlichen eine flächenförmige Ladeplattform 12 sowie wenigstens einen Hubaktuator 13. Mittels des Hubaktuators 13, der mit einem Hubarm 18 zusammenwirkt, die einerseits an der Ladeplattform 12 drehbar angelenkt sind und andererseits dehbar am Montageelement 17, wird die Ladeplattform 12 im wesentlichen vertikal aus einer unteren Stellung, vgl. Fig. 4, in eine obere Stellung, vgl. die Fig. 4 und 5, und umgekehrt überführt. Bei dem in Fig. 1 dargestellten Ladebordwandsystem 10 ist lediglich ein Hubaktuator 13 und ein damit zusammenwirkender Hubarm 18, der hier dreigeteilt ausgebildet ist, vgl. Fig. 2, vorgesehen. Das Ladebordwandsystem 10 gemäß der Erfindung kann aber auch zwei Hubaktuatoren 13 und dementsprechend zwei Hubarme 18 umfassen.

Bei dem in Fig. 1 dargestellten Ladebordwandsystem 10 ist darüber hinaus auch noch ein Klappaktuator 19 vorgesehen, der mit einem Klapparm 20 zusammenwirkt, die ebenfalls geeignet an der Ladeplattform 12 einerseits und am Montageelement 17 andererseits drehbar angelenkt sind, so daß ein Klappen der Ladeplattform 12 aus der Horizontalen in die Vertikale und umgekehrt möglich ist, vgl. auch Pfeil 27, in der die Klappbewegbarkeit der Ladeplattform 12 schematisch dargestellt ist.

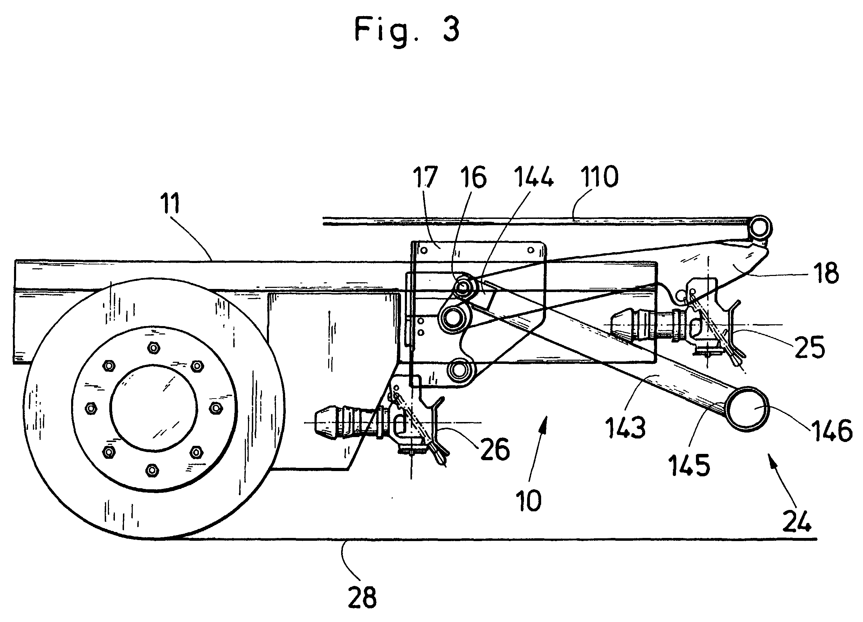

Der Hubaktuator 13 und der Hubarm 18 bilden zusammen mit den entsprechenden Anlenkpunkten bzw. Drehpunkten am Montageelement 17 und an der Ladeplattform 12 eine im wesentlichen parallelogrammförmige Struktur, so daß ein Anheben und Absenken der Ladeplattform 12 im wesentlichen vertikal zu einem Untergrund 28, vgl. die Fig. 3 bis 5, möglich ist.

Das Ladebordwandsystem 10 umfaßt darüber hinaus einen Unterfahrschutz 14, der aus zwei voneinander beabstandeten Schenkeln 140, 143 beseht, die an ihren einen Enden 141, 144 Schwenkpunkte 15, 16 aufweisen, die an den erwähnten Montageelementen 17 jeweils vorgesehen sind, an denen auch die jeweiligen montageelementseitigen Schwenkpunkte des Hubaktuators 13 und des Hubarms 18 bzw. des Klappaktuators 19 und des Klapparms 20 jeweils drehbar befestigt sein können, vgl. dazu insbesondere auch die Darstellung von Fig. 2. Die Schwenkpunkte 15, 16 des Unterfahrschutzes 14 sind bei der in den Fig. dargestellten Ausgestaltung des Ladebordwandssystems 10 über jeweilige Winkelelemente 149, 150 befestigt, es ist aber auch möglich, das Montageelement 17 derart auszugestalten, daß dieses einstückig mit den Winkelelementen 149, 150 ausgebildet ist, d.h. entsprechend ausgeformt ist.

Die anderen Enden 142, 145 der Schwenkarme 140, 143 sind mit einer im wesentlichen quer zu den Schwenkarmen 140, 143 bzw. zum Fahrzeug 11 verlaufenden Quertraverse 146 verbunden, die in einer beliebigen geeigneten Form, beispielsweise in Form eines zylindrischen Rohres, ausgebildet sein kann.

Die Schenkellänge 147, vgl. Fig. 5, ist derart bemessen, daß in oberer, angehobener Passivstellung 23 des Unterfahrschutzes 14 eine obere, am Fahrzeug 11 angeordnete Anhängerkupplung 25 völlig freisteht, d.h. in die Anhängerkupplung 25 ein nicht dargestelltes Kupplungselement eines Anhängers eingeführt bzw. eingerastet werden kann. Aus Übersichtlichkeitsgründen ist in Fig. 5 die obere passive Endstellung 23 des Unterfahrschutzes 14 nicht ganz in der Horizontalen liegend dargestellt, es ist aber mit dem erfindungsgemäßen Ladebordwandsystem 10 möglich, die Schenkel 140, 143 derart zu schwenken, daß sie im wesentlichen parallel zur Ladefläche 110 eines Fahrzeugs 11 ausgerichtet sein können. Der fahrzeugseitige Schwenkpunkt 15, 16 des Unterfahrschutzes 14, der an den einen Enden 141, 144 der Schwenkarme 140, 143 vorgesehen ist, ist, wie aus den Fig. ersichtlich, vom fahrzeugseitigen Schwenkpunkt des Hubaktuators 13 bzw. vom fahrzeugseitigen Schwenkpunkt des Hubarmes 18 entkoppelt angeordnet, d.h. entkoppelt in Fahrzeuglängsrichtung und entkoppelt in bezug auf die vertikale Höhe von einem Untergrund 28. Der fahrzeugseitige Schwenkpunkt 15, 16 des Unterfahrschutzes 14 ist, wie ebenfalls aus den Fig. ersichtlich, vom fahrzeugseitigen Schwenkpunkt des Klappaktuators 19 bzw. vom fahrzeugseitigen Schwenkpunkt des Klapparmes 20 entkoppelt angeordnet, d.h. entkoppelt in Fahrzeuglängsrichtung und entkoppelt in bezug auf die vertikale Höhe von einem Untergrund 28. Durch diese Maßnahme bzw. Maßnahmen ist es möglich, eine Geometrie des Unterfahrschutzes 14 zu erreichen, die gewährleistet, daß dieser in angehobener, oberer Passivstellung 23, vgl. Fig. 5, den Zugriff auf die obere Anhängerkupplung 25 nicht behindert und entsprechend konstruktiv ausgebildet ermöglicht, daß tatsächlich die obere Anhängerkupplung 25 am hinteren Ende des Fahrzeugs 11 befestigt werden kann, so daß die Deichsel eines Anhängers, die mit der Anhängerkupplung 25 verbunden wird, in ihrer Bewegung bei den verschiedenen möglichen Fahrbewegungen, beispielsweise beim Kurvenfahren, nicht behindert wird.

Bei der in den Fig. 1 und 2 dargestellten Ausgestaltung des Ladebordwandsystems 10 sind jeweils mit dem Hubarm 18 und dem Klapparm 20 einerseits und dem jeweiligen dort zu liegen kommenden Schwenkarmen 140, 143 des Unterfahrschutzes 14 zusammenwirkende Schwenkaktuatoren 21 vorgesehen, mittels derer, geeignet gesteuert, der Unterfahrschutz 14 aus einer abgesenkten Passivstellung 22, vgl. Fig. 4, in eine angehobene Passivstellung 23, vgl. Fig. 5, sowie in eine Aktivstellung 24, vgl. Fig. 3, überführbar ist. Da im Anhängerbetrieb der Unterfahrschutz 14 keine Wirkung hat, wird dieser in eine obere Passivstellung 23 gemäß Fig. 5 überführt. Während des Ladebetriebes wird der Unterfahrschutz 14 in eine untere Passivstellung 22 gemäß Fig. 4 überführt und nachfolgend, wenn der Ladebetrieb abgeschlossen ist und kein Anhängerbetrieb vorgesehen ist, in die Aktivstellung 24 gemäß Fig. 3 überführt, wo der Unterfahrschutz 14 seine bestimmungsgemäße Unterfahrschutzfunktion ausüben kann. Ist eine zweite, untere Anhängerkupplung 26 vorgesehen, was für bestimmte Arten des Anhängerbetriebes erforderlich sein kann, kann der Unterfahrschutz 14 ebenfalls in die obere Passivstellung 23 gemäß Fig. 5 überführt werden. Die untere Anhängerkupplung 26 ist dann unbehindert durch den Unterfahrschutz 14 zugänglich.

Der Schwenkaktuator 21 muß nicht zwingend zwischen Hubarm 18 und/oder Klapparm 20 und wenigstens dem Unterfahrschutz 14 wirkend angeordnet sein. Zwar ist damit auf elegante Weise, zumindest was die Hauptbewegung des Unterfahrschutzes 14 angeht, eine automatische Klappbewegung möglich, wenn der Hubaktuator bzw. der Klappaktuator 13, 19 bewegt werden, es sind auch Lösungen denkbar, bei denen der eine Anlenkpunkt des jeweiligen Schwenkaktuators 21 wirkmäßig am Montageelement 17 oder gar direkt am Fahrzeug 11 drehbar angeordnet sind, wohingegen der andere Anlenkpunkt des Schwenkaktuators 21 am jeweiligen Schwenkarm 140, 143 drehbar angeordnet ist.

Die Schwenkaktuatoren 140, 143 sind hier als hydraulisch und/oder pneumatisch betriebene Kolben-Zylinder-Einrichtungen dargestellt, genau wie der Hubaktuator 13 und der Klappaktuator 19. Es ist aber auch möglich, die Schwenkaktuatoren 21 wie den Hubaktuator 13 und den Klappaktuator 19 in Form eines motorangetriebenen Spindelsystems auszubilden, wobei der Motor hydraulisch, pneumatisch oder elektrisch angetrieben sein kann.

### Bezugszeichenliste

- 10: Ladebordwandsystem
- 11: Fahrzeug
- 110: Ladefläche
- 12: Ladeplattform
- 13: Hubaktuator
- 14: Unterfahrschutz
- 140: Schwenkarm
- 141: Ende (Schwenkarm)
- 142: Ende (Schwenkarm)
- 143: Schwenkarm
- 144: Ende (Schwenkarm)
- 145: Ende (Schwenkarm)
- 146: Quertraverse
- 147: Schenkellänge
- 148: Schenkellänge
- 149: Winkelelement
- 150: Winkelelement
- 15: Schwenkpunkt
- 16: Schwenkpunkt
- 17: Montageelement
- 18: Hubarm
- 19: Klappaktuator
- 20: Klapparm
- 21: Schwenkaktuator
- 22: abgesenkte Passivstellung
- 23: angehobene Passivstellung
- 24: Aktivstellung
- 25: Anhängerkupplung (oben)
- 26: Anhängerkupplung (unten)
- 27: Pfeil
- 28: Untergrund

## Patentansprüche

1. Ladebordwandsystem (10) zur Anbringung an ein Fahrzeug (11), umfassend wenigstens eine Ladeplattform (12) die mittels eines am Fahrzeug (11) befestigten Hubaktuators (13) zwischen einer oberen und einer unteren Stellung schwenkend hin und her bewegbar ist, sowie einen relativ zum Fahrzeug verschwenkbaren Unterfahrschutz (14), **dadurch gekennzeichnet, daß** der Unterfahrschutz (14) mit seinem fahrzeugseitigen Schwenkpunkt (15, 16) vom fahrzeugseitigen Schwenkpunkt wenigstens des Hubaktuators (13) und/oder eines Hubarms (18) entkoppelt angeordnet ist.

2. Ladebordwandsystem nach Anspruch 1, **dadurch gekennzeichnet, daß** der Unterfahrschutz (14) mit seinem fahrzeugseitigen Schwenkpunkt (15, 16) vom fahrzeugseitigen Schwenkpunkt wenigstens eines Klappaktuators (19) und/oder eines Klapparms (20) entkoppelt angeordnet ist.

3. Ladebordwandsystem nach einem oder beiden der Ansprüche 1 oder 2, **dadurch gekennzeichnet, daß** der Unterfahrschutz (14) mit seinem Schwenkpunkt (15, 16) direkt oder über ein Montageelement (17) am Fahrzeug (11) befestigt ist.

4. Ladebordwandsystem nach Anspruch 3, **dadurch gekennzeichnet, daß** am Montageelement (17) ebenfalls der Hubaktuator (13) und ein Hubarm (18) und/oder ein Klappaktuator (19) und ein Klapparm (20) angeordnet sind.

5. Ladebordwandsystem nach einem oder mehreren der Ansprüche 1 bis 4, **dadurch gekennzeichnet, daß** der Unterfahrschutz (14) mittels eines Schwenkaktuators (21) aus einer abgesenkten Passivstellung (22) in eine angehobene Passivstellung (23) sowie eine Aktivstellung (24) schwenkbar ist.

6. Ladebordwandsystem nach Anspruch 5, **dadurch gekennzeichnet, daß** der Hubaktuator (21) zwischen Hubarm (18) und/oder am Klapparm (20) und wenigstens dem Unterfahrschutz (14) wirkend angeordnet ist.

7. Ladebordwandsystem nach Anspruch 5, **dadurch gekennzeichnet, daß** der Schwenkaktuator (21) zwischen dem Fahrzeug (11) und dem Montageelement (17) und dem Unterfahrschutz (14) wirkend angeordnet ist.

8. Ladebordwandsystem nach einem oder mehrerer der Ansprüche 1 bis 7, **dadurch gekennzeichnet, daß** der Unterfahrschutz (14) wenigstens zwei Schwenkarme (140, 143) umfaßt, die an ihren einen Enden (141, 144) jeweils ihren Schwenkpunkt (15, 16) aufweisen, und an ihren anderen Enden (142, 145) über eine zu den Schwenkarmen (140, 143) im wesentlichen quer zum Fahrzeug (11) verlaufende Quertraverse (146) verbunden sind.

9. Ladebordwandsystem nach Anspruch 8, **dadurch gekennzeichnet, daß** die Schenkellänge (147, 148) der Schwenkarme (140, 143) derart bemessen ist, daß in oberer angehobener Passivstellung (23) des Unterfahrschutzes (14) eine obere und/oder eine untere, am Fahrzeug (11) angeordnete Anhängerkupplung (25, 26) ungehindert betreibbar ist (Tandemanhängerbetrieb).

10. Ladebordwandsystem nach einem oder mehreren der Ansprüche 5 bis 9, **dadurch gekennzeichnet, daß** der Hubaktuator (13) und/oder der Klappaktuator (19) und/oder der Schwenkaktuator (21) hydraulisch und/oder pneumatisch und/oder elektrisch antreibbar sind.
